## Europäisches Patentamt
## European Patent Office
## Office européen des brevets

(19)

(11) Numéro de publication: **0 020 198**
**B1**

(12)

# FASCICULE DE BREVET EUROPEEN

(45) Date de publication du fascicule du brevet: **12.01.83**

(51) Int. Cl.³: **A 47 B 96/00,**
**F 16 B 12/26, F 25 D 23/04**
**//E05C19/06, F25D25/02**

(21) Numéro de dépôt: **80400540.3**

(22) Date de dépôt: **21.04.80**

(54) **Etagère amovible verrouillable pour porte aménagée, et réfrigérateur comportant une contre-porte ainsi aménagée.**

(30) Priorité: **23.05.79 FR 7913206**

(43) Date de publication de la demande:
**10.12.80 Bulletin 80/25**

(45) Mention de la délivrance du brevet:
**12.01.83 Bulletin 83/2**

(84) Etats contractants désignés:
**DE IT**

(56) Documents cités:
**FR - A - 652 399**
**FR - A - 2 405 385**

(73) Titulaire: **THOMSON-BRANDT**
**173, Boulevard Haussmann**
**F-75360 Paris Cedex 08 (FR)**

(72) Inventeur: **Lemoine, Marcel**
**"THOMSON-CSF" SCPI- 173, bld Haussmann**
**F-75360 Paris Cedex 08 (FR)**

(74) Mandataire: **Thrierr, Francoise et al,**
**THOMSON-CSF SCPI 173, Bld Haussmann**
**F-75379 Paris Cedex 08 (FR)**

Courier Press, Leamington Spa, England.

# Etagère amovible verrouillable pour porte aménagée, et réfrigérateur comportant une contre-porte ainsi aménagée

La présente invention est relative à une étagère amovible verrouillable pour porte amenagée. Une application particulièrement intéressante est l'aménagement d'une contre-porte de réfrigérateur.

Les portes aménagées de certains meubles, comme les réfrigérateurs, les armoires de toilette comportent souvent des étagères amovibles, par exemple des tiroirs ou des boîtes avec couvercles. Ces étagères doivent donc être fixées à la porte en temps normal, surtout lors de l'ouverture ou de la fermeture de la porte, mais susceptibles de pouvoir être enlevées, pour leur chargement ou leur nettoyage.

Selon une réalisation antérieure, une telle étagère est dotée de deux tétons, placés sur les bords latéraux, s'encastrant dans deux encoches prévues dans les montants de la porte, à laquelle elle est ainsi fixée. Cependant, ces tétons doivent permettre d'enlever l'étagère par simple traction vers l'avant, et donc ne sont pas pleinement efficaces pour la fixation de l'étagère à la porte, surtout lorsque celle-ci est ouverte ou fermée brutalement.

La présente invention a pour but de remédier à ces inconvénients et a pour objet une étagère amovible verrouillable pour porte aménagée.

Selon une caractéristique de l'invention, l'étagère amovible verrouillable pour porte aménagée comprenant des montants à encoches destinés à supporter l'étagère, comporte au moins un verrou à ressort, muni d'un bouton-poussoir et engagé dans une glissière placée au moins d'un côté de l'étagère, permettant la mise en place ou le retrait de l'étagère dans les montants.

Un des avantages de l'invention est qu'elle est applicable à toutes sortes d'étagères, que ce soit des tiroirs, des boîtes-vitrines ayant un couvercle ou autre. Un autre avantage réside dans la facilité de transport de meubles ayant des portes aménagées comportant de telles étagères. Il n'y a plus besoin de les fixer pendant les transports grâce au système de verrouillage.

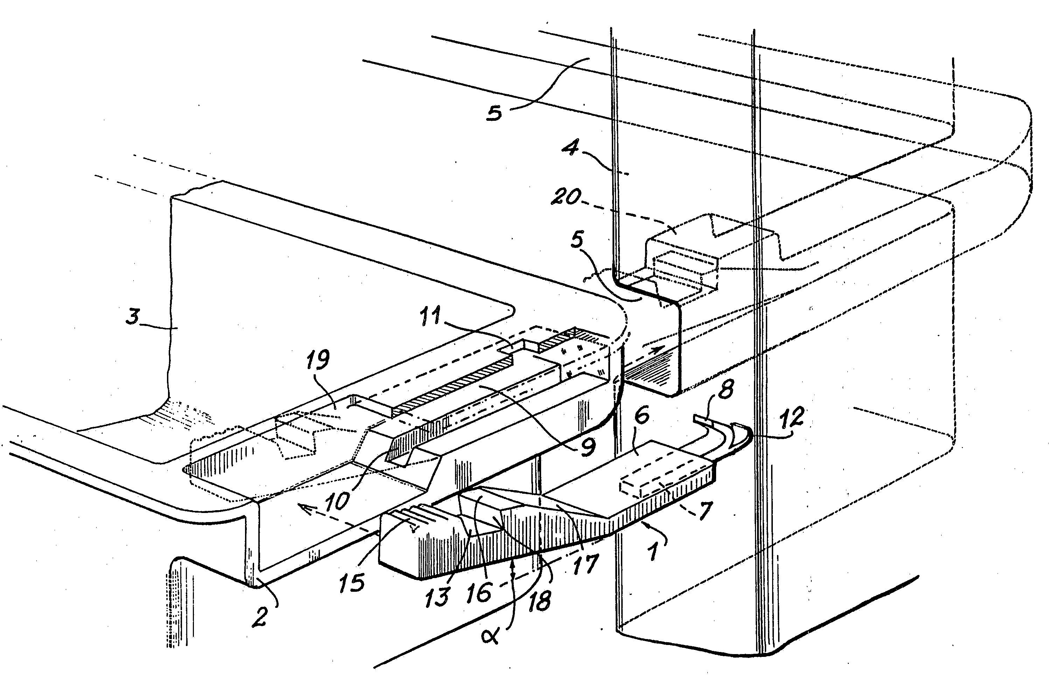

D'autres avantages et caractéristiques de l'invention apparaîtront dans la description qui suit, illustrée par la figure unique qui représente une étagère amovible verrouillable dans la porte aménagée, selon l'invention.

Sur la figure unique est représentée l'étagère avec le système de verrouillage selon l'invention. Le verrou à ressort 1 est réalisé dans une pièce de matériau rigide et élastique: ce peut être une pièce métalliqué ou une pièce moulée dans un matériau plastique présentant les caractéristiques précitées. Dans les appareils électroménagers, comme un réfrigérateur, le matériau plastique présente l'avantage d'être léger et de ne pas rouiller. Ce verrou 1 est fixé dans la glissière 2 de l'étagère 3 représentée partiellement en coupe avec une partie enlevée, elle-même étant maintenue dans la porte 4 grâce aux montants 5.

Le verrou à ressort 1 comporte des moyens de fixation dans la glissière 2 de l'étagère 3, constitués par la partie 6 de la pièce 1 réalisée en forme de lame. Sous cette partie 6 est réalisée une empreinte 7, prolongée par une languette 8 recourbée vers l'autre face de la pièce 1. La partie 6 du verrou 1 vient se loger dans la partie 9 de la glissière 2 de l'étagère 3, l'empreinte 7 glissant dans une rainure 10 aménagée dans la glissière et la languette 8 entrant se coincer dans un trou 11 réalisé sur la partie supérieure de la glissière 2.

Pour éviter au ressort 1 de bouger dans la glissière 2, une fois que la languette 8 est coincée dans le trou 11, on peut ajouter une languette 12 de rattrapage de jeu.

Le verrou à ressort 1 comporte également une encoche 13 destinée à l'accrochage de l'étagère 3 dans les montants 5 de la porte 4, et un bouton-poussoir 15. L'encoche 13 est réalisée entre le bouton-poussoir 15 et le front raide 18 d'une empreinte 16 comportant également un front incliné 17 vers la partie 6 du verrou 1. Le bouton-poussoir 15 est lui-même réalisé par une empreinte pratiquée dans la pièce constituant le verrou 1. Le verrou à ressort 1 s'engage dans une partie 19 de la glissiére 2, dont la hauteur, ou dimension perpendiculaire au plan de l'étagère 3, est plus grande que celle de la partie 9 où est logée la partie 6 du verrou 1. Dans la partie 19 de la glissière 2 se trouvent le bouton-poussoir 15 et l'empreinte 16.

Les montants 5 de la porte aménagée 4 comprennent une encoche 20 dans laquelle se loge l'empreinte 16, dont le front incliné 17 permet l'introduction aisée dans les montants et dont le front raide 18 empêche le retrait de l'étagère hors des montants, sans intervention de l'utilisateur sur le bouton-poussoir 15 du verrou.

Il suffit pour déverrouiller l'étagère, de passer sur le ou les deux boutons-poussoirs de façon à libérer l'empreinte 16 du verrou à ressort 1 de l'encoche 20 des montants 5 de la porte aménagée 4. Pour augmenter la course du bouton-poussoir 15 dans un encombrement donné, la base du bouton-poussoir 15, de l'encoche 13 et de l'empreinte 16 peut faire un angle $\alpha$ avec la base de la partie 6 du verrou 1.

## Revendications

1. Etagère (3) amovible verrouillable pour porte (4) aménagée comportant des montants (5) à encoches (20) destinés à supporter l'étagère, caractérisée en ce qu'elle comporte au moins un verrou à ressort (1) muni d'un bouton-poussoir (15) et engagé dans une glissière (2) placée au moins d'un côté de l'étagère (3) permettant la mise en place ou le retrait de l'étagère (3) dans les montants (5).

2. Etagère amovible verrouillable selon la revendication 1, caractérisée en ce qu'elle comporte deux verrous à ressort (1) placés de chaque côté de l'étagère (3).

3. Etagère amovible verrouillable selon les revendications 1 ou 2, caractérisée en ce que le verrou à ressort (1) est réalisé dans une pièce de matériau rigide et élastique.

4. Etagère amovible verrouillable selon la revendication 3, caractérisée en ce que le verrou à ressort (1) comporte des moyens de fixation dans la glissière (2) de l'étagère (3) et une encoche (13) destinée à l'accrochage de l'étagère (3) dans les montants (5) de la porte (4).

5. Etagère amovible verrouillable selon la revendication 4, caractérisée en ce que les moyens de fixation du verrou à ressort (1) dans la glissière (2) de l'étagère (3) sont constitués par une partie (6), en forme de lame, de la pièce constituant le verrou (1) sur une face de laquelle est réalisée une empreinte (7) qui est prolongée par une languette (8) recourbée vers l'autre face de la pièce.

6. Etagère amovible verrouillable selon les revendications 4 et 5, caractérisée en ce que la pièce constituant le verrou à ressort (1) comporte une empreinte (16) présentant un front raide (18) et un front incliné (17) ce dernier étant incliné vers la partie moulée en forme de lame et le front raide (18) de l'empreinte réalisant avec le bouton-poussoir (15) l'encoche (13) destinée à l'accrochage à l'étagère (3) dans les montants (5) de la porte (4).

7. Etagère amovible verrouillable selon la revendication 6, caractérisée en ce que le bouton-poussoir (15) est constitué par une empreinte réalisée dans la pièce constituant le verrou à ressort (1), du même côté que l'empreinte (16).

8. Etagère amovible verrouillable selon la revendication 7, caractérisée en ce que le plan de base des deux empreintes (15 et 16) entre lesquelles est réalisée l'encoche (13) fait un angle aigü (α) avec le plan de la partie (6) en forme de lame.

9. Etagère amovible verrouillable selon la revendication 8, caractérisée en ce que la glissière (2) placée de chaque côté de l'étagère (3) comporte une première partie (19) dans laquelle s'engage le verrou à ressort (1) et une seconde partie (9) de hauteur, ou dimension perpendiculaire au plan de l'étagère, réduite dans laquelle la partie (6) du verrou (1) réalisée en forme de lame vient se loger, cette seconde partie (9) de la glissière (2) comportant en plus une rainure (10) dans laquelle glisse l'empreinte (7) et un trou (11) dans lequel se bloque la languette (8).

10. Réfrigérateur comportant une contre-porte aménagée à l'aide d'étagères selon une quelconque des revendications 1 à 9.

## Claims

1. A removable, lockable compartment element (3) for a door (4) including compartment means and comprising support elements (5) formed with notches (20) to support said compartment element, characterized in that said compartment element comprises at least one resilient latch member (1) provided with a press button (15) and inserted into a slide rail (2), said slide rail being provided on at least one side of said compartment element (3) and enabling insertion of said compartment element (3) into or removal thereof from said support elements (5).

2. A removable, lockable compartment element as claimed in claim 1, characterized in that it comprises two resilient latch members (1) which are provided on either side of said compartment element (3).

3. A removable, lockable compartment element as claimed in any of claims 1 to 2, characterized in that the resilient latch member (1) is integrally formed from a rigid and elastic material.

4. A removable, lockable compartment element as claimed in claim 3, characterised in that said resilient latch member (1) comprises fixing means for being secured in said slide rail (2) of the compartment element (3) and further comprises a recess (13) for securing said compartment element (3) in the support elements (5) of said door (4).

5. A removable, lockable compartment element as claimed in claim 4, characterized in that the fixing means of said resilient latch member (1) in said slide rail (2) of the compartment element (3) are formed of a leaf-shaped portion (6) of the part forming said latch member (1), one side of the said leaf-shaped portion (6) being formed with an embossed area (7) which is extended by a tongue (8) turned back towards the other side of said part.

6. A removable, lockable compartment element as claimed in claims 4 and 5, characterized in that the part forming said resilient latch member (1) is formed with a projecting portion (16) having an upright face (18) and an inclined face (17), the latter being inclined towards said leaf-shaped portion and the upright face (18) of said projecting portion together with said press button (15) forming said recess (13) which is intended to secure said compartment element (3) in the support elements (5) of said door (4).

7. A removable, lockable compartment element as claimed in claim 6, characterized in that said press button (15) is formed of a projection which is provided on the same side as the projecting portion (16) in the part forming said resilient latch member (1).

8. A removable, lockable compartment element as claimed in claim 7, characterized in that the base of said two projecting portions (15 and 16), between which the recess (13) is formed, forms an acute angle ($\alpha$) relative to the base of said leaf-shaped portion (6).

9. A removable, lockable compartment element as claimed in claim 8, characterized in that the slide rail (2) provided on either side of said compartment element (3) includes a first portion (19) which is engaged by said resilient latch member (1) and includes a second portion (9) of lesser height or dimensions perpendicular to the plane of said compartment element, into which second portion the leaf-shaped part (6) of the resilient latch member (1) is adapted to be inserted, wherein said second portion (9) of the slide rail (2) furthermore includes a groove (10) in which said embossed area (7) may slide and a cut-out (11) in which said tongue (8) latchingly engages.

10. A refrigerator comprising an inner door including compartment means is constructed by means of compartment elements as claimed in any of the claims 1 to 9.

## Patentansprüche

1. Abnehmbares verriegelbares Fachelement (3) für eine Tür (4) mit Facheinrichtung, welche Stützen (5) mit Einschnitten (20) zum Tragen des Fachelements aufweist, dadurch gekennzeichnet, daß es mindestens einen Federriegel (1) aufweist, der mit einer Drucktaste (15) versehen ist und in eine Gleitschiene (2) eingesetzt ist, die auf mindestens einer Seite des Fachelements (3) angeordnet ist und das Einsetzen des Fachelements (3) in die Stützen (5) oder das Herausziehen desselben aus den Stützen (5) ermöglicht.

2. Abnehmbares verriegelbares Fachelement nach Anspruch 1, dadurch gekennzeichnet, daß es zwei Federriegel (1) aufweist, die auf jeder Seite des Fachelements (3) angeordnet sind.

3. Abnehmbares verriegelbares Fachelement nach den Ansprüchen 1 oder 2, dadurch gekennzeichnet, daß der Federriegel (1) einstückig aus einem starren und elastischen Material hergestellt ist.

4. Abnehmbares verriegelbares Fachelement nach Anspruch 3, dadurch gekennzeichnet, daß der Federriegel (1) Befestigungselemente zur Befestigung in der Gleitschiene (2) des Fachelements (3) und einen Einschnitt (13), der dem Einrasten des Fachelements (3) in den Stützen (5) der Tür (4) dient, aufweist.

5. Abnehmbares verriegelbares Fachelement nach Anspruch 4, dadurch gekennzeichnet, daß die Befestigungselemente des Federriegels (1) in der Gleitschiene (2) des Fachelements (3) aus einem blattförmigen Teil (6) des den Riegel (1) bildenden Stücks bestehen, auf dessen einer Fläche ein Vorsprung (7) ausgebildet ist, der durch eine zur anderen Seite des Stücks zurückgebogene Zunge (8) verlängert ist.

6. Abnehmbares verriegelbares Fachelement nach den Ansprüchen 4 und 5, dadurch gekennzeichnet, daß das den Federriegel (1) bildende Stück einen Vorsprung (16) aufweist, der eine steile Fläche (18) und eine Schrägfläche (17) besitzt, wobei letztere in Richtung auf den blattförmigen Teil geneigt is und die steile Fläche (18) des Vorsprungs mit der Drucktaste (15) den Einschnitt (13) bildet, der zum Einrasten des Fachelements (3) in den Stützen (5) der Tür (4) dient.

7. Abnehmbares verriegelbares Fachelement nach Anspruch 6, dadurch gekennzeichnet, daß die Drucktaste (15) aus einem Vorsprung besteht, der in dem den Ferderriegel (1) bildenden Stück auf der gleichen Seite wie der Vorsprung (16) ausgebildet ist.

8. Abnehmbares verriegelbares Fachelement nach Anspruch 7, dadurch gekennzeichnet, daß die Grundfläche der zwei Vorsprünge (15 und 16), zwischen denen der Einschnitt (13) ausgebildet ist, mit der Grundfläche des blattförmigen Teils (6) einen spitzen Winkel ($\alpha$) bildet.

9. Abnehmbares verriegelbares Fachelement nach Anspruch 8, dadurch gekennzeichnet, daß die auf jeder Seite des Fachelements (3) angeordnete Gleitschiene (2) einen ersten Abschnitt (19) aufweist, in den der Federriegel (1) eingreift, und einen zweiten Abschnitt (9) von geringerer Höhe oder Abmessung senkrecht zur Ebene des Fachelements, in den der blattförmig ausgebildete Teil (6) des Riegels (1) einsetzbar ist, wobei dieser zweite Abschnitt (9) der Gleitschiene (2) außerdem eine Nut (10) aufweist, in der der Vorsprung (7) gleitet, und ein Loch (11), in welchem die Zunge (8) einrastet.

10. Kühlschrank mit einer Innentür mit Facheinrichtung, die mittels Fachelementen nach einem der Ansprüche 1 bis 9 ausgebildet ist.

0 020 198

1